# EUROPEAN PATENT SPECIFICATION

(11) **EP 2 273 081 B1**
(45) Date of publication and mention of the grant of the patent: **11.07.2012**
(21) Application number: 10164662.8
(22) Date of filing: 01.06.2010
(51) Int. Cl.: F01N 3/08, B01D 53/86

(54) **Exhaust gas control apparatus for internal combustion engine, and method of controlling the same**
Abgassteuerungsvorrichtung für einen Verbrennungsmotor und Verfahren zu ihrer Steuerung
Appareil de contrôle de gaz d'échappement pour un moteur à combustion interne et son procédé de commande

(30) Priority: 05.06.2009 JP 2009136311; 09.12.2009 JP 2009279782
(43) Date of publication of application: 12.01.2011
(73) Proprietor: Toyota Jidosha Kabushiki Kaisha, Aichi-ken, 471-8571 (JP)
(72) Inventor: Watanabe, Masao, Toyota-shi, Aichi-ken, 471-8571 (JP); Hayashi, Koutarou, Toyota-shi, Aichi-chen, 471-8571 (JP); Kinoshita, Youhei, Toyota-shi, Aichi-chen, 471-8571 (JP); Imoto, Rui, Toyota-shi, Aichi-chen, 471-8571 (JP)
(74) Representative: Winter, Brandl, Fürniss, Hübner, Röss, Kaiser, Polte - Partnerschaft

(56) References cited:
- WO-A1-2008/081735
- JP-A- 2008 163 898

## Description

### BACKGROUND OF THE INVENTION

### 1. Field of the Invention

The invention relates to an exhaust gas control apparatus for an internal combustion engine, and a method of controlling the same.

### 2. Description of the Related Art

An exhaust gas control apparatus for an internal combustion engine, which includes a NOx storage reduction catalyst, is widely used. Most of NOx generated in a combustion chamber of an internal combustion engine is NO (nitrogen monoxide). In general, a NOx storage material used in the NOx storage reduction catalyst is not able to efficiently absorb the NO. That is, it is difficult for the NOx storage material to efficiently absorb the NO, and the NOx storage material efficiently absorbs NO₂ or the like, to which the NO has been oxidized. Therefore, in the NOx storage reduction catalyst, the NOx is absorbed by oxidizing the NO to the NO₂ or the like using noble metal such as Pt (platinum). However, at low temperatures immediately after cold start of the engine, the noble metal has not been activated, and thus, it is not possible to sufficiently oxidize the NO to the NO₂ or the like.

Accordingly, an exhaust gas control apparatus, in which ozone is generated and supplied at low temperatures immediately after the cold start of the engine so that the NO is oxidized to the NO₂ or the like in a gas phase, and the NO₂ or the like is absorbed by the NOx storage material, has been proposed. However, because it takes some time to start an ozone generator, a sufficient amount of the ozone cannot be supplied immediately after the start of the engine. Accordingly, the shortage of the ozone is caused, and thus, the discharge of the NOx to the atmosphere cannot be sufficiently suppressed.

Japanese Patent Application Publication No. 2008-163898 (JP-A-2008-163898) describes an exhaust gas control apparatus in which an ozone adsorbent, which adsorbs ozone, is disposed upstream of a NOx storage reduction catalyst. In the exhaust gas control apparatus, before an engine is started, the ozone is supplied to the ozone adsorbent so that the ozone is accumulated in the ozone adsorbent. In the exhaust gas control apparatus, after the engine is started, the temperature of the ozone adsorbent is increased by heat of exhaust gas, and the ozone, which has been accumulated in the ozone adsorbent, is desorbed from the ozone adsorbent. This reduces the possibility that the shortage of the ozone is caused due to delay in the generation of the ozone immediately after the start of the engine.

However, in the exhaust gas control apparatus described in Japanese Patent Application Publication No. 2008-163898, because the ozone needs to be generated and supplied to the ozone adsorbent before the start of the engine, the engine cannot be quickly started, and therefore, the start of the engine is delayed.

Also, in the exhaust gas control apparatus in which the ozone is used, if an excessive amount of the ozone is supplied with respect to the amount of the NOx discharged from the engine, the superfluous ozone may be discharged from a tail-pipe. Also, because the amount of the NOx discharged from the engine changes depending on an operating state, it is difficult to accurately control the amount of the ozone supplied by the ozone generator, in accordance with the change in the amount of the discharged NOx.

Further, while the ozone generator is operated, electric power is used to operate the ozone generator. Also, when gas containing the ozone is supplied to an exhaust passage, the flow rate of the gas in the exhaust passage is increased, and pressure loss is increased. This deteriorates fuel efficiency. Thus, there is a demand to minimize a period during which the ozone is supplied.

WO 2008 081735 describes another exhaust gas control apparatus.

### SUMMARY OF THE INVENTION

The invention provides an exhaust gas control apparatus for an internal combustion engine, which suppresses the discharge of NOx to the atmosphere after cold start, and which has low electric power consumption and good controllability, and a method of controlling the same.

A first aspect of the invention relates to an exhaust gas control apparatus for an internal combustion engine. The exhaust gas control apparatus includes a NOx adsorbent that is provided in an exhaust passage of an internal combustion engine, and that adsorbs nitrogen monoxide; an active oxygen supply device that supplies active oxygen to an area upstream of the NOx adsorbent; and a control portion that performs a first control that does not cause the active oxygen supply device to supply the active oxygen while exhaust gas flows to the NOx adsorbent at a time of cold start of the internal combustion engine, whereby the nitrogen monoxide is adsorbed by the NOx adsorbent, wherein the control portion performs a second control that causes the active oxygen supply device to supply the active oxygen after the first control is finished, whereby the nitrogen monoxide adsorbed by the NOx adsorbent is converted to a nitrate or a nitrate ion on the NOx adsorbent.

According to the first aspect, the active oxygen does not need to be supplied for a while after the start of the engine. This reduces the possibility that emissions deteriorate due to the shortage of the active oxygen immediately after the start of the engine. Also, it is not necessary to delay the start of the engine to prepare for the supply of the active oxygen. Further, it is possible to shorten a period during which the active oxygen supply device is operated, thereby decreasing electric power consumption. Also, a desorption temperature is shifted to a higher temperature by converting the nitrogen monoxide adsorbed by the NOx adsorbent to a nitrate or a nitrate ion. Therefore, when a NOx purification catalyst is disposed downstream of the NOx adsorbent, the NOx is retained in the NOx adsorbent until the NOx purification catalyst is activated. Accordingly, it is possible to suppress the discharge of the NOx to the atmosphere. Also, during the second control, when the amount of the supplied active oxygen is controlled based on the amount of the nitrogen monoxide adsorbed by the NOx adsorbent, it is not necessary to control the amount of the supplied active oxygen in accordance with a change in the amount of the NOx discharged from the internal combustion engine. Therefore, the amount of the supplied active oxygen is easily and accurately controlled. Thus, good controllability is provided.

In the first aspect, the control portion may start the second control before a temperature of the NOx adsorbent reaches a desorption temperature at which the nitrogen monoxide adsorbed by the NOx adsorbent is desorbed from the NOx adsorbent.

According to the above-described aspect, the desorption temperature is increased by converting the nitrogen monoxide adsorbed by the NOx adsorbent to the nitrate or the nitrate ion before the nitrogen monoxide is desorbed from the NOx adsorbent. Therefore, it is possible to reliably suppress the desorption of the nitrogen monoxide from the NOx adsorbent.

In the first aspect, the control portion may calculate an amount of the nitrogen monoxide adsorbed by the NOx adsorbent while performing the first control; and the control portion may control an amount of the supplied active oxygen during the second control, based on the calculated amount of the nitrogen monoxide.

According to the above-described aspect, it is possible to appropriately control the amount of the supplied active oxygen. That is, it is possible to reliably convert all the nitrogen monoxide adsorbed by the NOx adsorbent to the nitrate or the nitrate ion, and to suppress the discharge of the surplus active oxygen to the atmosphere.

In the first aspect, when the NOx adsorbent adsorbs NOx, a main component of the NOx may be the nitrogen monoxide.

According to the above-described aspect, the nitrogen monoxide discharged from the engine is adsorbed by the NOx adsorbent. Therefore, the nitrogen monoxide discharged from the engine does not need to be oxidized using a noble metal catalyst at the time of cold start. Accordingly, even when the noble metal catalyst has not been activated, it is possible to reliably suppress the discharge of the NOx to the atmosphere.

In the first aspect, when NOx is desorbed from the NOx adsorbent, a main component of the NOx may be nitrogen dioxide.

According to the above-described aspect, the nitrogen monoxide adsorbed by the NOx adsorbent is converted to the nitrate or the nitrate ion. Therefore, mainly the NOx in the form of nitrogen dioxide is desorbed from the NOx adsorbent. The nitrogen dioxide desorbed from the NOx adsorbent does not need to be oxidized by the catalyst disposed downstream of the NOx adsorbent. Therefore, the NOx is purified by the catalyst disposed downstream of the NOx adsorbent at high efficiency.

The exhaust gas control apparatus according to the first aspect may further include a NOx reduction catalyst that reduces NOx desorbed from the NOx adsorbent.

According to the above-described aspect, it is possible to reliably suppress the discharge of the NOx to the atmosphere.

The exhaust gas control apparatus according to the above-described aspect may further include a temperature-increasing portion that performs a temperature-increasing control to increase a temperature of the NOx reduction catalyst after the second control is started.

According to the above-described aspect, the NOx reduction catalyst is reliably activated before the NOx is desorbed from the NOx absorbent. Therefore, the NOx desorbed from the NOx adsorbent is reliably reduced and purified by the NOx reduction catalyst.

In the above-described aspect, the NOx reduction catalyst may be disposed downstream of the NOx adsorbent.

According to the above-described aspect, the desorption temperature is sufficiently high after the NO adsorbed by the NOx adsorbent is oxidized using the active oxygen. Therefore, the NOx is reliably retained in the NOx adsorbent until the NOx reduction catalyst is activated.

In the above-described aspect, the NOx reduction catalyst may be provided integrally with the NOx adsorbent.

According to the above-described aspect, after the NO adsorbed by the NOx adsorbent is oxidized using the active oxygen, the desorption temperature is lower than the desorption temperature after the NO adsorbed by the NOx adsorbent is oxidized using the active oxygen in the case where the NOx reduction catalyst is provided separately from the NOx adsorbent. Thus, as compared to the case where the NOx reduction catalyst is provided separately from the NOx adsorbent, it is possible to reduce the NOx at low temperatures. Therefore, energy required to reduce the NOx is decreased, and fuel efficiency is improved. Also, NOx reduction efficiency is increased.

In the above-described aspect, the NOx reduction catalyst and the NOx adsorbent may be provided in a manner such that the NOx reduction catalyst is mixed with the NOx adsorbent.

According to the above-described aspect, the NOx reduction efficiency is further improved.

In the above-described aspect, a NOx reduction catalyst layer, which is a layer of the NOx reduction catalyst, and a NOx adsorbent layer, which is a layer of the NOx adsorbent, may be stacked.

According to the above-described aspect, the amount of the NOx adsorbed by the NOx adsorbent is further increased, and in addition, the NOx reduction efficiency is further increased.

In the above-described aspect, the NOx adsorbent layer may be provided on an upper surface of the NOx reduction catalyst layer.

According to the above-described aspect, the amount of the NOx adsorbed by the NOx adsorbent is further increased, and in addition, the NOx reduction efficiency is further increased.

In the above-described aspect, an HC adsorbent layer may be provided on an upper surface of the NOx adsorbent layer, and the HC adsorbent layer may have HC adsorption ability higher than that of the NOx adsorbent layer.

According to the above-described aspect, HC (hydrocarbon) is trapped by the HC adsorbent, and thus, the adsorption of the HC by the NOx adsorbent is suppressed. Therefore, the amount of the NOx adsorbed by the NOx adsorbent is further increased.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a diagram illustrating a system configuration according to a first embodiment of the invention;
FIG. 2 is a diagram showing compositions of simulant gases used in Test 1 according to the first embodiment of the invention;
FIG. 3 is a graph showing results of measurement in Test 1 according to the first embodiment of the invention;
FIG. 4 is a schematic diagram showing how NO is converted to a nitrate or a nitrate ion on a NOx adsorbent using ozone;
FIG. 5 is a diagram showing an experimental device in Test 2 according to the first embodiment of the invention;
FIG. 6 is a graph showing results of measurement in Test 2 according to the first embodiment of the invention;
FIG. 7 is a diagram showing compositions of simulant gases used in Test 2 according to the first embodiment of the invention;
FIG. 8 is a diagram showing the temperature characteristic of a NOx conversion efficiency achieved by a NOx reduction catalyst;
FIG. 9 is a flowchart performed in the first embodiment of the invention;
FIG. 10 is a diagram schematically showing another example of the system configuration according to the first embodiment of the invention;
FIG. 11 is a diagram illustrating a system configuration according to a second embodiment of the invention;
FIG 12 is a diagram schematically showing a NOx adsorbent and a NOx reduction catalyst provided in a NOx purification device;
FIG. 13 is a diagram schematically showing the NOx adsorbent and the NOx reduction catalyst provided in the NOx purification device;
FIG. 14 is a diagram schematically showing the NOx adsorbent and the NOx reduction catalyst provided in the NOx purification device;
FIG. 15 is a diagram showing results of measurement in Test 3 according to the second embodiment of the invention;
FIG. 16 is a diagram showing results of measurement in Test 4 according to the second embodiment of the invention;
FIG. 17 is a diagram showing results of measurement in Test 4 according to the second embodiment of the invention;
FIG. 18 is a diagram showing results of measurement in Test 5 according to the second embodiment of the invention; and
FIG. 19 is a diagram showing results of measurement in Test 6 according to the second embodiment of the invention.

### DETAILED DESCRIPTION OF EMBODIMENTS

Hereinafter, embodiments of the invention will be described with reference to the drawings. In the drawings, the same and corresponding elements are denoted by the same reference numerals, and the repeated description thereof will be omitted.

### First embodiment

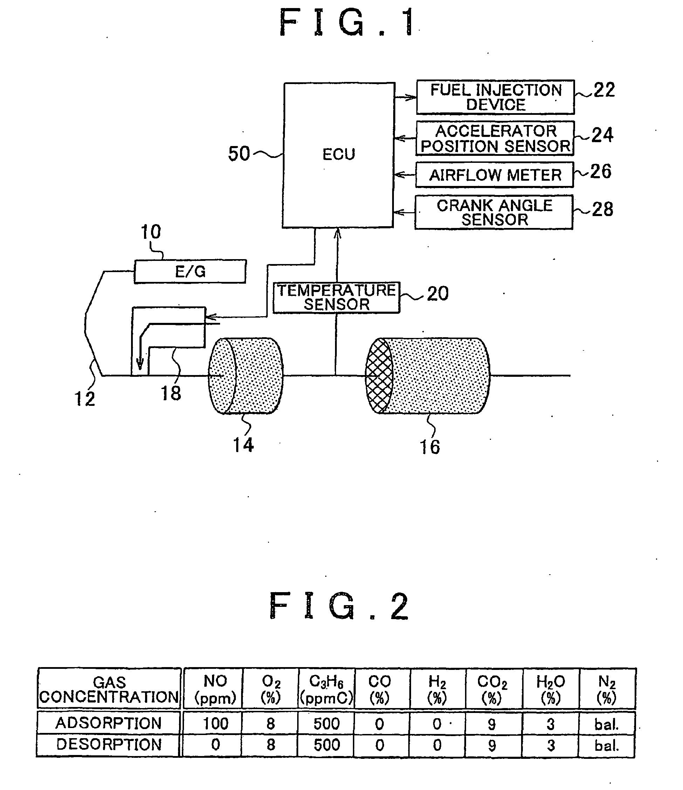

FIG. 1 is a schematic diagram showing a system configuration according to a first embodiment of the invention. As shown in FIG. 1, the system according to the embodiment includes an internal combustion engine (hereinafter, simply referred to as "engine") 10. A NOx adsorption device 14 and a NOx catalyst device 16 are provided in an exhaust passage 12 in which exhaust gas discharged from the engine 10 flows.

A NOx adsorbent is provided in the NOx adsorption device 14. The NOx adsorbent adsorbs NOx (nitrogen oxide) at low temperatures, and the adsorbed NOx is desorbed from the NOx adsorbent at high temperatures. For example, zeolite-based materials are preferably used as the NOx adsorbent. The NOx adsorbent adsorbs NO₂, NO₃, N₂O₅, and the like. In addition, the NOx adsorbent adsorbs NO (nitrogen monoxide). When the temperature of the NOx adsorbent becomes equal to or higher than a given temperature, the adsorbed NOx starts to be rapidly desorbed from the NOx adsorbent.

The NOx catalyst device 16 is provided in the exhaust passage 12 at a position downstream of the NOx adsorption device 14. A NOx reduction catalyst (NOx storage-reduction catalyst) is provided in the NOx catalyst device 16. The NOx reduction catalyst includes noble metal such as Pt (platinum) and Rh (rhodium), and a NOx storage material. The NOx reduction catalyst absorbs the NOx in a lean atmosphere. The stored NOx is desorbed from the NOx reduction catalyst, and the NOx is reduced and purified, in a rich atmosphere where an air-fuel ratio is equal to or lower than the stoichiometric air-fuel ratio. The NOx is stored in the NOx storage material by producing a nitrate. The NOx storage material is not able to efficiently absorb the NO discharged from the engine 10. In other words, the NOx storage material efficiently absorbs NO₂, NO₃, N₂O₅, and the like, to which NO has been oxidized and converted.

The system according to the embodiment includes an ozone supply device (active oxygen supply device) 18 that supplies ozone to a portion of the exhaust passage 12, which is located upstream of the NOx adsorption device 14. The ozone supply device 18 includes an air pump, an ozone generator, a flow rate adjustment valve, and an ozone injection nozzle. Air drawn by the air pump is transferred to the ozone generator, and a high-voltage discharge is applied to the air. As a result, the ozone (O₃) is generated using oxygen in the air. The ozone supply device 18 injects gas containing the ozone into the portion of the exhaust passage 12, which is located upstream of the NOx adsorption device 14, through the ozone injection nozzle.

The system according to the embodiment further include a temperature sensor 20 that detects the temperature of exhaust gas flowing out of the NOx adsorption device 14; a fuel injection device 22 that injects fuel into each cylinder of the engine 10; an accelerator position sensor 24 that detects the position of an accelerator pedal of a vehicle in which the engine 10 is provided; an airflow meter 26 that detects the amount of air taken into the engine 10; a crank angle sensor 28 that detects the rotational angle of a crankshaft of the engine 10; and an Electronic Control Unit (ECU) 50. The ECU 50 is connected to actuators for controlling the engine, such as the ozone supply device 18 and the fuel injection device 22, and sensors for controlling the engine, such as the temperature sensor 20, the accelerator position sensor 24, the airflow meter 26, and the crank angle sensor 28.

In order to reduce and purify the NOx using the NOx reduction catalyst in the NOx catalyst device 16, the noble metal needs to be activated. However, it takes a certain time to increase the temperature of the NOx reduction catalyst to a temperature equal to or higher than an activation temperature (approximately 250 °C in general) after the cold start of the engine 10. Therefore, it is not possible to reduce and purify the NOx using the NOx reduction catalyst in the NOx catalyst device 16, immediately after the cold start.

Accordingly, in the embodiment, the NOx adsorption device 14 is provided so that the NOx adsorbent in the NOx adsorption device 14 adsorbs the NOx discharged from the engine 10 immediately after the cold start. With this configuration, it is possible to avoid the situation where the NOx discharged from the engine 10 is discharged to the atmosphere immediately after the cold start.

Most of the NOx generated in a combustion chamber of the engine 10, that is, most of the NOx discharged from the engine 10 is NO (nitrogen monoxide). As described above, the NOx adsorbent in the NOx adsorption device 14 is able to adsorb the NO. Therefore, according to the embodiment, it is possible to remove the NO discharged from the engine 10 using the NOx adsorption device 14 at cold temperatures immediately after the cold start. Thus, it is possible to suppress the discharge of the NOx to the atmosphere.

After the cold start, the NOx adsorbent is heated by exhaust gas, and accordingly, the temperature of the NOx adsorbent is increased. When the temperature of the NOx adsorbent becomes equal to or higher than a given temperature, the NOx adsorbed by the NOx adsorbent starts to be desorbed from the NOx adsorbent. If the NO has been adsorbed by the NOx adsorbent, the adsorbed NO is desorbed from the NOx adsorbent. The temperature, at which the NO starts to be rapidly desorbed from the NOx adsorbent, is approximately 100 °C.

In the embodiment, the NOx, which has been desorbed from the NOx adsorbent in the NOx adsorption device 14, needs to be reduced and purified in the NOx catalyst device 16. However, in general, the temperature of the NOx reduction catalyst in the NOx catalyst device 16 has not reached the activation temperature (approximately 250 °C) at the time point at which the temperature of the NOx adsorbent in the NOx adsorption device 14 reaches 100 °C after the cold start. Therefore, if the NO is desorbed from the NOx adsorbent in the NOx adsorption device 14, it is not possible to sufficiently reduce and purify the NO in the NOx catalyst device 16.

As described above, the NOx storage material in the NOx reduction catalyst is not able to efficiently absorb the NO. That is, in order to remove the NO using the NOx storage material, it is necessary to oxidize the NO to NO₂ or the like using the activity of the noble metal in the NOx reduction catalyst. Thus, in the NOx reduction catalyst, the NOx is absorbed by the NOx storage material by oxidizing the NO to NO₂ or the like using the noble metal. However, at the time point at which the temperature of the NOx adsorbent in the NOx adsorption device 14 reaches 100 °C after the cold start, the noble metal has not been activated, and therefore, it is not possible to oxidize the NO to NO₂ or the like.

Accordingly, when the temperature of the NOx adsorbent in the NOx adsorption device 14 exceeds 100 °C after the cold start, and the NOx starts to be desorbed from the NOx adsorbent, the discharge of the NO to the atmosphere may not be sufficiently suppressed. As a result of conducting studies, the inventors have found that it is extremely effective to use a technology in which the adsorbed NO is converted to a nitrate or a nitrate ion by supplying the ozone to the NOx adsorbent that has adsorbed the NO. Hereinafter, the technology will be described based on experimental examples.

### Preparation of a NOx adsorbent specimen

A base material made of cordierite with a volume of 35 cc (the diameter 30 mm × the length 50 mm) was prepared. The base material was coated with zeolite that served as the NOx adsorbent. In this case, ZSM-5 subjected to ion exchange with Fe (iron) was used as zeolite. The base material was coated with the ZSM-5 at a rate of 150 g / L. Hereinafter, the specimen thus produced will be referred to as "specimen 1".

### Test 1

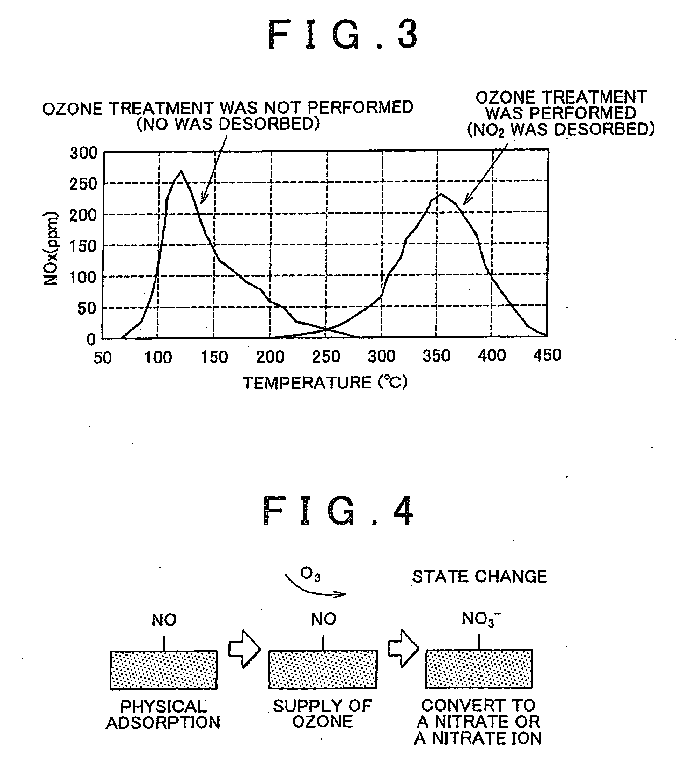

The specimen 1 was set in an experimental device, and a simulant gas was supplied. Thus, the test was conducted according to the following steps. The flow rate of the simulant gas was 20 L / min. (1) The system was heated to 500 °C, and all the NOx adsorbed by the specimen 1 was desorbed from the specimen 1. (2) The system was cooled and the temperature of the system was maintained at 50 °C. The NO at 100 ppm was added to the simulant gas, and the NO was adsorbed by the specimen 1. FIG. 2 shows the composition of the simulant gas. After the NO was adsorbed by the specimen 1 for a sufficient time until the concentration of the NO on the downstream side of the specimen 1 became equal to the concentration of the NO on the upstream of the specimen 1, the addition of the NO was stopped. Then, the specimen 1 was left at 50 °C for 15 minutes. (3) The ozone at 100 ppm was added to the simulant gas, and the specimen 1 was further left at 50 °C for 15 minutes. (4) After the addition of the ozone was stopped, the temperature of the system was gradually increased to 500 °C. During this period, a relation between the temperature of the system and the amount of the NOx desorbed from the specimen 1 was examined by measuring the concentration of the NOx on the downstream side of the specimen 1 using an exhaust gas analyzing device. Further, another test was conducted. The other test was the same as the above-described test, except that the ozone treatment in the step (3) was not performed. FIG. 3 shows the result of measurement performed when the ozone treatment was performed, and the result of measurement performed when the ozone treatment was not performed.

As shown in FIG. 3, when the ozone treatment was not performed, the NOx was desorbed from the NOx adsorbent in a temperature range of approximately 70 °C to 250 °C. In this case, the temperature (i.e., the desorption temperature), at which the concentration of the NOx on the downstream side of the specimen 1 was increased at the highest rate, was approximately 100 °C. All the NOx desorbed from the NOx adsorbent was NO.

In contrast, as shown in FIG. 3, when the ozone treatment was performed, the NOx was desorbed from the NOx adsorbent in a temperature range of approximately 250 °C to 450 °C. In this case, the temperature (i.e., the desorption temperature), at which the concentration of the NOx on the downstream side of the specimen 1 was increased at the highest rate, was approximately 300 °C. Almost all the NOx desorbed from the NOx adsorbent was NO₂.

Hereinafter, the results of the above-described experiment will be described. FIG. 4 is a schematic diagram showing how the NO (nitrogen monoxide) is converted to the nitrate or the nitrate ion on the NOx adsorbent using the ozone. As shown in FIG. 4, when the ozone is supplied to the NOx adsorbent that has adsorbed the NO, the NO is oxidized on the NOx adsorbent using the ozone, and thus, the NO is converted to NO₃⁻. That is, the NO that is physically adsorbed by the surface of the NOx adsorbent is converted to the nitrate or the nitrate ion using the ozone. Thus, the adsorption state is stabilized, and the desorption is unlikely to occur. It is considered that, as a result of this adsorption state, the desorption temperature is increased from approximately 100 °C to 300 °C.

### Test 2

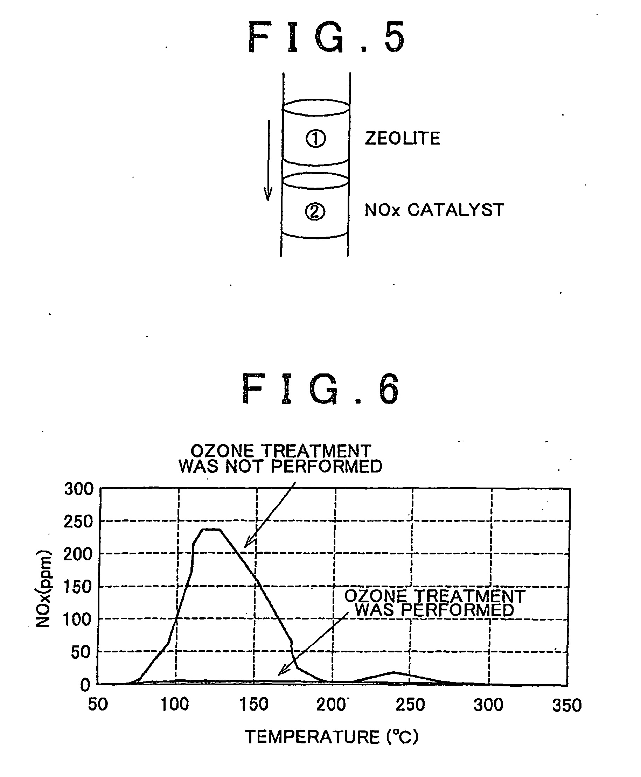

Subsequent to Test 1, the specimen of the NOx reduction catalyst was prepared as follows. A base material made of cordierite with a volume of 35 cc (the diameter 30 mm × the length 50 mm) was coated with the NOx reduction catalyst. In the NOx reduction catalyst, Pt (platinum) / Rh (rhodium), which were noble metal components, and Ba (barium) / K (potassium) / Li (lithium), which were the NOx storage material components, were supported by Al₂O₃, TiO₂, and ZrO₂. Hereinafter, the specimen thus produced will be referred to as "specimen 2". As shown in FIG. 5, the specimen 2 was set downstream of the specimen 1 in the experimental device, and the simulant gases were supplied. Thus, the test was conducted according to the following steps. The flow rate of the simulant gases was 20 L/min.

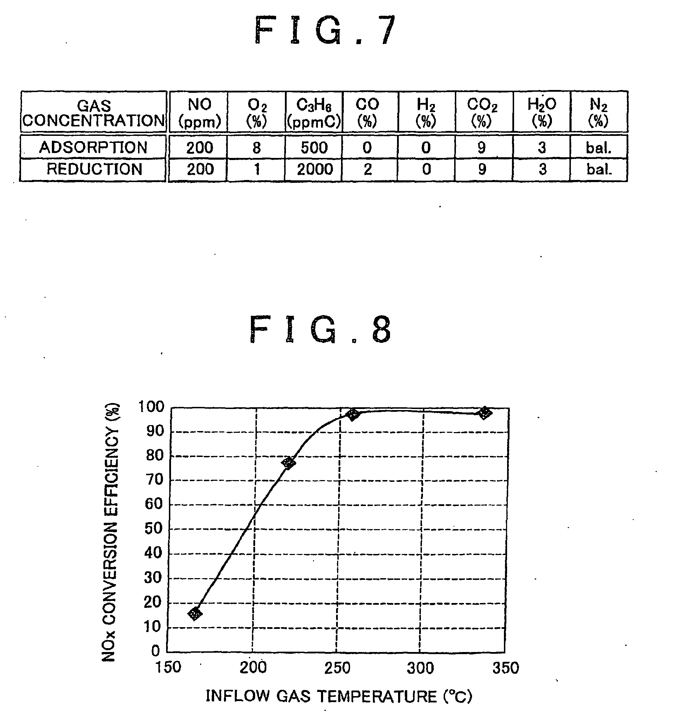

(1) The system was heated to 500 °C, and all the NOx adsorbed by the specimen 1 was desorbed from the specimen 1. (2) The system was cooled, and the temperature of the system was maintained at 50 °C. The NO at 100 ppm was added to the simulant gas, and the NO was adsorbed by the specimen 1. The composition of the simulant gas is shown in an upper section denoted by "ADSORPTION" in FIG. 2. After the NO was adsorbed by the specimen 1 for a sufficient time until the concentration of the NO on the downstream side of the specimen 1 became equal to the concentration of the NO on the upstream side of the specimen 1, the addition of the NO was stopped. The specimen 1 and the specimen 2 were left at 50 °C for 15 minutes while supplying the simulant gas whose composition is shown in a lower section denoted by "DESORPTION" in FIG. 2. (3) The ozone at 100 ppm was added to the simulant gas, and the specimen 1 and the specimen 2 were further left at 50 °C for 15 minutes. (4) After the addition of the ozone was stopped, the temperature of the system was gradually increased to 350 °C. During this period, the concentration of the NOx on the downstream side of the specimen 2 was measured using the exhaust gas analyzing device. Further, another test was conducted. The other test was the same as the above-described test, except that the ozone treatment in the step (3) was not performed. FIG. 6 shows the result of measurement performed when the ozone treatment was performed, and the result of measurement performed when the ozone treatment was not performed. (5) The temperature of the system was maintained at 350 °C, and a process, in which the NOx was stored in the specimen 2 (for 85 seconds), and the NOx was reduced (for 5 seconds), was repeated using the simulant gases whose compositions are shown in FIG. 7. Thus, the NOx conversion efficiency was measured. As a result, the NOx conversion efficiency was 97 % in each of the case where the ozone treatment was performed, and the case where the ozone treatment was not performed.

As shown in FIG. 6, when the ozone treatment was not performed, in a temperature range up to 170 °C, the NOx concentration on the downstream side of the specimen 2 was substantially equal to the NOx concentration on the downstream side of the specimen 1 when the ozone treatment was not performed in Test 1 (FIG 3). This signifies that the NO desorbed from the NOx adsorbent in the specimen 1 passed through the specimen 2, and flowed to an area downstream of the specimen 2. The reason is considered as follows. As shown in FIG. 3, when the ozone treatment is not performed, most of the NO adsorbed by the NOx adsorbent in the specimen 1 is desorbed from the NOx adsorbent without being converted, in a temperature range of 100 to 200 °C. When the temperature of the NOx adsorbent is 100 to 200 °C, the noble metal in the NOx adsorbent has not been activated. Therefore, the NO, which has flowed from the specimen 1, is not oxidized by the noble metal in the specimen 2. Also, the NOx storage material in the specimen 2 is not able to absorb the NO. Therefore, when the ozone treatment is not performed, the NO, which has been desorbed from the NOx adsorbent in the specimen 1, flows to the area downstream of the specimen 2 without being removed by the specimen 2.

In contrast, when the ozone treatment was performed, the NOx concentration on the downstream side of the specimen 2 was maintained at substantially zero until the temperature was increased to 350 °C, as shown in FIG. 6. The reason is considered as follows. When the ozone treatment is performed, the NO adsorbed by the NOx adsorbent in the specimen 1 is converted to the nitrate or the nitrate ion, and thus, the adsorption state is stabilized. Accordingly, the desorption temperature is increased to approximately 300 °C. Therefore, when the NOx is desorbed from the NOx adsorbent, the NOx reduction catalyst in the specimen 2 has already been sufficiently activated. Therefore, the NOx desorbed from the NOx adsorbent is efficiently absorbed by the NOx storage material in the NOx reduction catalyst. Further, in this case, the NOx desorbed from the NOx adsorbent in the specimen 1 is not the NO that is not absorbed by the NOx storage material. The NOx desorbed from the NOx adsorbent in the specimen 1 is the NO₂ that is absorbed by the NOx storage material. Accordingly, the NOx desorbed from the Nox adsorbent in the specimen 1 is efficiently and smoothly absorbed by the NOx storage material in the specimen 2. Thus, when the ozone treatment is performed, the NOx desorbed from the NOx absorbent in the specimen 1 is removed by the NOx reduction catalyst in the specimen 2. As a result, it is possible to reduce the possibility that the NOx flows to the area downstream of the specimen 2.

In the above-described Test 2, the NOx reduction catalyst started to store and reduce the NOx at 350 °C as described in the step (5). As a result, the high NOx conversion efficiency (97 %) was achieved. As described above, when the ozone treatment was performed, the NOx concentration on the downstream side of the specimen 2 was maintained at substantially zero, while the temperature of the NOx adsorbent (i.e., the specimen 1) and the NOx reduction catalyst (i.e., the specimen 2) was increased from 50 °C to 350 °C.

The temperature, at which the NOx reduction catalyst starts to store and reduce the NOx, is not limited to 350 °C. FIG. 8 shows the temperature characteristic of the NOx conversion efficiency achieved by the NOx reduction catalyst in the specimen 2. As shown in FIG. 8, the high NOx conversion efficiency is generally achieved by the NOx reduction catalyst at approximately 250 °C or higher. Accordingly, when using the NOx reduction catalyst with this characteristic, the NOx reduction catalyst may start store and reduce the NOx at approximately 250 °C.

As shown by the results of the experiment, the desorption temperature is shifted to a higher temperature by converting the NO adsorbed by the NOx adsorbent to the nitrate or the nitrate ion using the ozone. Thus, the catalyst disposed downstream of the NOx adsorbent is sufficiently activated before the NOx is desorbed from the NOx adsorbent. Therefore, transition occurs extremely smoothly from a stage where the NOx is removed by the NOx adsorbent at low temperatures after the cold start, to a stage where the NOx is purified by the catalyst after the catalyst is activated. Thus, it is possible to suppress the discharge of the NOx to the atmosphere during the transition.

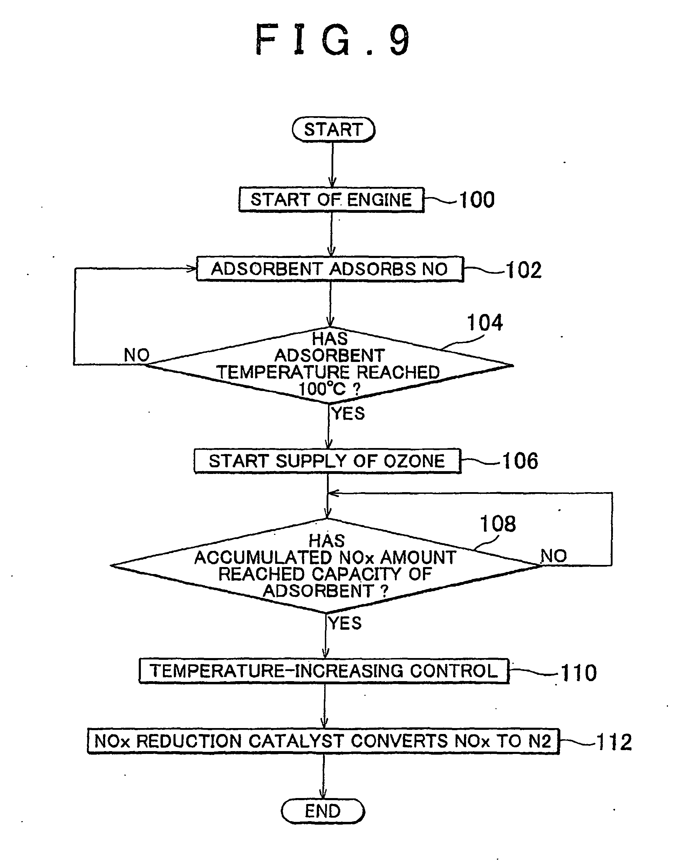

In the embodiment, the discharge of the NOx to the atmosphere is suppressed by employing the same principle employed in the above-described Test 2, after the cold start of the engine 10. FIG. 9 shows a flowchart performed by the ECU 50 in the embodiment to implement the function.

As shown in FIG. 9, when it is determined that the cold start of the engine 10 has been performed (step 100), the ozone supply device 18 does not supply the ozone to the exhaust passage 12 while the exhaust gas flows into the NOx adsorption device 14 (step 102). Thus, the NO in the exhaust gas is adsorbed by the NOx adsorbent in the NOx adsorption device 14. Accordingly, while the exhaust gas passes through the NOx adsorption device 14, the NO is removed.

While the NO is removed by the NOx adsorption device 14, it is determined whether the temperature of the NOx adsorbent in the NOx adsorption device 14 has reached 100 °C that is the NO desorption temperature at which the NO is desorbed from the NOx adsorbent (step 104). In this case, the temperature detected by the temperature sensor 20, that is, the temperature of the exhaust gas flowing out of the NOx adsorption device 14 is used as the temperature of the NOx adsorbent in the NOx adsorption device 14. If it is determined that the temperature of the NOx adsorbent is lower than 100 °C in step 104, it is determined that the NOx adsorbent is able to further adsorb the NO. Therefore, in this case, the routine returns to step 102, and the NO continues to be adsorbed by the NOx adsorbent.

If it is determined that the temperature of the NOx adsorbent has reached 100 °C in step 104, a control is started to supply the ozone to an area upstream of the NOx adsorption device 14 using the ozone supply device 18 (step 106). Accordingly, the NO adsorbed by the NOx adsorbent is converted to the nitrate or the nitrate ion due to a reaction between the NO and the ozone flowing into the NOx adsorption device 14, as shown in FIG. 4. As a result, the desorption temperature is increased to approximately 300 °C. Therefore, the desorption of the NOx from the NOx adsorption device 14 is suppressed. A period from a time point at which the engine 10 is started to a time point at which the temperature of the NOx adsorbent reaches 100 °C is long enough for making the ozone supply device 18 ready for supplying the ozone. Therefore, in step 106, the ozone supply device 18 is able to supply the required amount of the ozone.

In step 106, it is preferable that the amount of the ozone supplied by the ozone supply device 18 should be controlled as follows. In the ECU 50, a NOx discharge map, which is created by examining a relation between the rotational speed and load of the engine 10 and the amount of the NOx discharged from the engine 10, is stored in advance. Based on the NOx discharge map, the amount of the discharged NOx at each time point is calculated, and the amount of the discharged NOx is accumulated up to a time point at which the supply of the ozone is started. Thus, it is possible to calculate the amount of the NO flowing into the NOx adsorption device 14 (that is, the amount of the NO adsorbed by the NOx adsorbent) during the period from the time point at which the engine 10 is started to the time point at which the supply of the ozone is started. As shown in FIG. 4, the NO reacts with the ozone at a mole ratio of 1 : 1. Accordingly, the amount of the NO adsorbed by the NOx adsorbent in the NOx adsorption device 14 is converted to the number of moles, and the ozone supply device 18 supplies the ozone whose number of moles is larger than the number of moles of the NO (for example, the number of moles of the ozone is twice to three times the number of moles of the NO), tanking into account reaction efficiency. Thus, the NO adsorbed by the NOx adsorbent in the NOx adsorption device 14 is converted to the nitrate or the nitrate ion.

Subsequent to the process in step 106, it is determined whether an accumulated NOx amount, which is obtained by accumulating the amount of the discharged NOx at each time, has reached a predetermined adsorption capacity of the NOx adsorbent (step 108). If it is determined that the accumulated NOx amount has reached the adsorption capacity in step 108, a temperature-increasing control is performed to increase the temperature of the NOx reduction catalyst in the NOx catalyst device 16 to a temperature equal to or higher than the activation temperature (for example, 250 °C) (step 110). The temperature-increasing control is performed using a known method, for example, a method in which an exhaust gas fuel supply injector (not shown) supplies fuel to an exhaust system, or a method in which post-injection is performed in the engine 10.

When the temperature of the NOx adsorbent in the NOx adsorption device 14 is increased by the temperature-increasing control, mainly NOx in the form of NO₂ is desorbed from the NOx adsorbent. The desorbed NOx flows into the NOx catalyst device 16, and the NOx is reduced and converted to N₂ by the NOx reduction catalyst (step 112).

When the NO adsorbed by the NOx adsorbent is converted to the nitrate or the nitrate ion using the ozone, the adsorption state is further stabilized. Therefore, the adsorption capacity of the NOx adsorbent is increased. As a result, after it is determined that the accumulated NOx amount reaches the adsorption capacity (in step 108) in the routine shown in FIG. 9, the NOx in the exhaust gas is adsorbed and removed by the NOx adsorption device 14 during a period until the NOx reduction catalyst in the NOx catalyst device 16 is activated. Accordingly, it is possible to suppress the discharge of the NOX to the atmosphere during this period.

By performing the processes in the above-described routine in FIG. 9, the transition occurs extremely smoothly from the stage where the NOx is adsorbed and removed by the NOx adsorption device 14 at low temperatures after the cold start of the engine 10, to the stage where the NOx is reduced and purified by the NOx reduction catalyst in the NOx catalyst device 16 after the NOx reduction catalyst is activated. Accordingly, it is possible to suppress the discharge of the NOx to the atmosphere during the transition.

Further, according to the embodiment, the following advantageous effects are obtained. In general, the ozone supply device 18 is not ready for generating the ozone, and therefore, the ozone supply device 18 is not able to supply a sufficient amount of the ozone, at the time of start of the engine 10 and immediately after the start of the engine 10. Therefore, when using a system in which the NO discharged from the engine 10 immediately after the start of the engine 10 is oxidized in a gas phase using the ozone, and then, the NOx is absorbed by the NOx storage material, the NOx is likely to be discharged to the atmosphere, because the amount of the ozone is insufficient immediately after the start of the engine 10. In contrast, according to the embodiment, the NO discharged from the engine 10 is adsorbed and removed by the NOx adsorbent immediately after the start of the engine 10. Therefore, the ozone does not need to be supplied immediately after the start of the engine 10. The supply of the ozone is started on or before the time point at which the temperature of the NOx adsorbent reaches the NO desorption temperature. Therefore, it is possible to suppress the discharge of the NOx to the atmosphere even during a period immediately after the start of the engine 10, during which the ozone supply device 18 is not ready for generating the ozone.

According to the embodiment, after a certain amount of the NO is stored in the NOx adsorbent, the ozone supply device 18 supplies the ozone in pulses. The amount of the ozone is calculated based on the amount of the stored NO. That is, it is not necessary to perform a complicated control that accurately controls the amount of the supplied ozone in accordance with a change in the amount of the discharged NO due to a change in the engine rotational speed and a change in the engine load. Therefore, the control for supplying the ozone is simplified, and controllability is improved. Also, because the ozone does not need to be supplied for a while after the start of the engine 10, it is possible to shorten the period during which the ozone supply device 18 is operated. Therefore, it is possible to decrease electric power consumption, and to suppress the discharge of the ozone to the atmosphere.

In the embodiment, the ozone is supplied to the exhaust gas, as active oxygen. In the invention, other kinds of active oxygen (for example, negative oxygen ions represented by O⁻, C²⁻, O₂⁻, O₃⁻, Oₙ⁻, and the like) may be used instead of the ozone.

Also, in the embodiment, the ozone supply device 18 is disposed outside the exhaust gas passage. However, the invention is not limited to this configuration. An ozone generator may be disposed in the exhaust gas passage. In this case, in the ozone generator, electricity is discharged by applying high voltage, and thus, the active oxygen, such as the ozone, is generated using oxygen in the exhaust gas.

Also, in the embodiment, the supply of the ozone is started at the time point at which the temperature of the NOx adsorbent reaches 100 °C. However, the invention is not limited to this configuration. The supply of the ozone may be started at a predetermined temperature, for example, a temperature lower than 100 °C. Further, when zeolite is used as the NOx adsorbent, the supply of the ozone may be started at a temperature equal to or lower than 70 °C at which the desorption of the NO is started. Further, it may be determined whether the ozone supply device 18 is ready for supplying the ozone using another method, and then, the supply of the ozone may be started if it is determined that the ozone supply device 18 is ready for supplying the ozone. For example, it may be determined whether an elapsed time after the start of the engine 10 has reached a predetermined time sufficient for making the ozone supply device 18 ready in step 104; and if it is determined that the elapsed time has reached the predetermined time, the routine may proceed to step 106.

Also, the amount of the NO adsorbed by the NOx adsorbent may be calculated based on the NOx discharge map that is stored in the ECU in advance; and the supply of the ozone may be started when the calculated amount of the NO is equal to or larger than a predetermined amount (for example, when the amount of the NO reaches an upper limit amount that can be adsorbed by the NOx adsorbent).

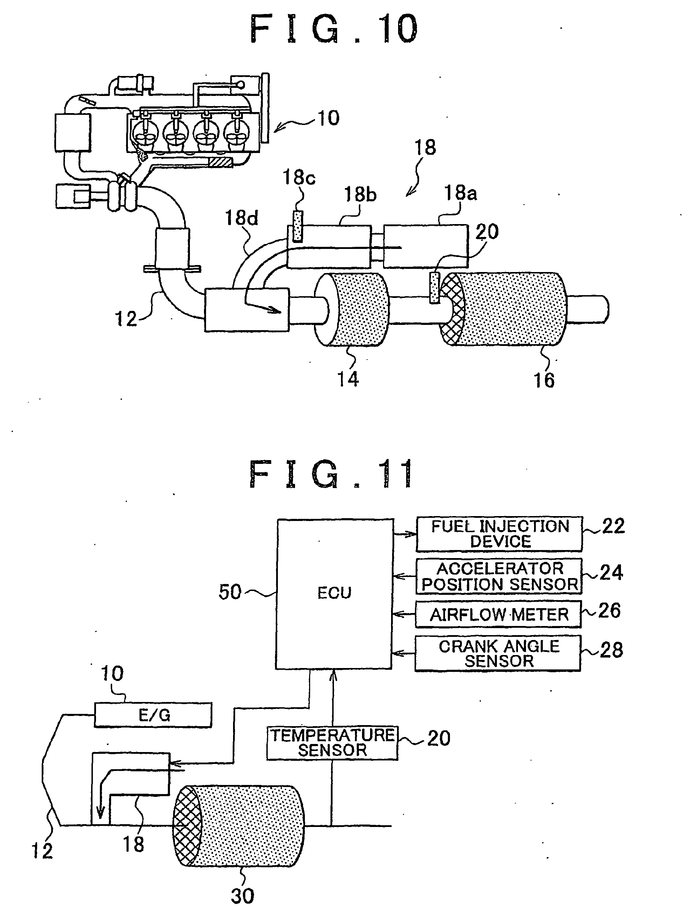

FIG. 10 schematically shows another example of the system configuration according to the embodiment of the invention. The ozone supply device 18 in the system shown in FIG. 10 includes an ozone generator 18a, and an ozone storage device 18b in which the ozone generated by the ozone generator 18a is stored. In the ozone storage device 18b, an ozone sensor 18c that detects the ozone concentration is provided. The ozone stored in the ozone storage device 18b can be supplied to a portion of the exhaust passage 12, which is located upstream of the NOx adsorption device 14, through a passage 18d. It is preferable that a control valve for controlling the amount of the supplied ozone should be provided in the passage 18d. In the invention, as in the system shown in FIG. 10, the ozone generated by the ozone generator 18a may be stored in the ozone storage device 18b, and then, the ozone may be supplied to the exhaust passage 12, instead of supplying the ozone to the exhaust passage 12 immediately after the ozone is generated. In this case, a timing, at which the supply of the ozone should be started, may be determined by detecting whether a sufficient amount of the ozone is stored in the ozone storage device 18b using the ozone sensor 18c, after the start of the engine 10. The ozone is retained without being dissolved in the ozone storage device 18b for several days. Accordingly, if a sufficient amount of the ozone remains in the ozone storage device 18b at the time of start of the engine 10, the supply of the ozone may be started without operating the ozone generator 18a.

In the above-described first embodiment, when the ECU 50 performs the processes in step 100 and 102, "the first control" according to the invention is performed. When the ECU 50 performs the processes in steps 104 and 106, "the second control" is performed. When the ECU 50 performs the process in step 110, "the temperature-increasing portion" according to the invention is implemented.

### Second embodiment

Next, a second embodiment of the invention will be described with reference to FIG. 11 to FIG. 17, with a focus on differences between the above-described first embodiment and the second embodiment. The description of the same and corresponding components will be simplified or omitted.

FIG. 11 is a diagram schematically showing a system configuration according to the second embodiment of the invention. As shown in FIG. 11, in the second embodiment, a NOx purification device 30 is provided in the exhaust passage 12. In the NOx purification device 30, a NOx adsorbent and a NOx reduction catalyst are integrally provided. The temperature sensor 20 detects the temperature of the exhaust gas flowing out of the NOx purification device 30.

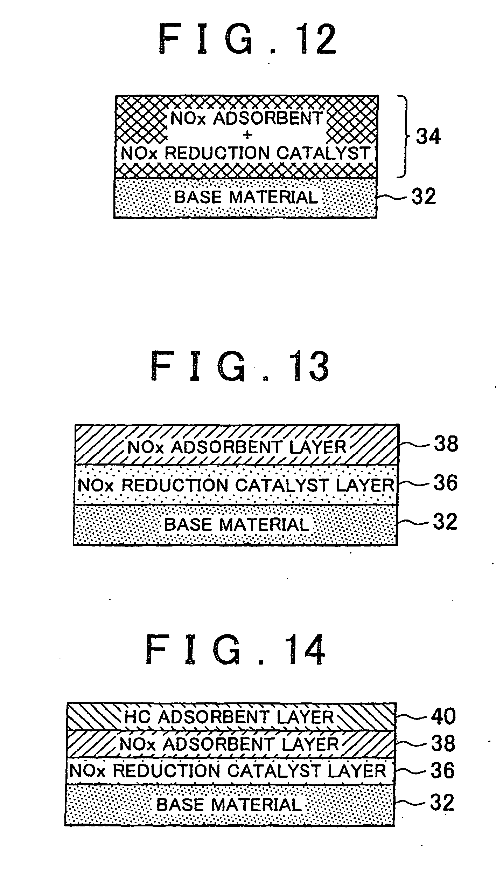

FIG. 12 to FIG. 14 schematically show the NOx adsorbent and the NOx reduction catalyst provided in the NOx purification device 30. It is preferable that the NOx adsorbent and the NOx reduction catalyst should be arranged in the NOx purification device 30 in any one of modes shown in FIG. 12 to FIG. 14. Hereinafter, a side in which a base material 32 is provided will be referred to as "lower side", and a side opposite to the base material 32 will be referred to as "upper side".

In an example shown in FIG. 12, a mixed layer 34, in which the NOx adsorbent is mixed with the NOx reduction catalyst, is provided on the upper surface of the base material 32. In an example shown in FIG. 13, a NOx reduction catalyst layer 36 made of the NOx reduction catalyst is provided on the upper surface of the base material 32, and a NOx adsorbent layer 38 made of the NOx adsorbent is provided on the upper surface of the NOx reduction catalyst layer 36. That is, the NOx reduction catalyst layer 36 and the NOx adsorbent layer 38 are stacked. In an example shown in FIG. 14, the NOx reduction catalyst layer 36 is provided on the upper surface of the base material 32, and the NOx adsorbent layer 38 is provided on the upper surface of the NOx reduction catalyst layer 36. In addition, an HC adsorbent layer 40 made of an HC adsorbent is further provided on the upper surface of the NOx adsorbent layer 38.

In the above-described first embodiment, when the NO adsorbed by the NOx adsorbent is converted to the nitrate or the nitrate ion, the desorption temperature is increased to approximately 300 °C. Accordingly, when the NOx is desorbed from the NOx adsorbent, and reduced by the NOx catalyst, the temperature of the NOx adsorbent and the NOx reduction catalyst needs to be increased to a temperature equal to or higher than 300 °C. Therefore, when the temperature-increasing control is performed to reduce the NOx, slightly large energy is required. As described above, the NOx reduction catalyst is able to reduce the NOx even at approximately 250 °C. Thus, if the temperature, at which the NOx is desorbed from the NOx adsorbent, is decreased to approximately 250 °C, the NOx is reduced at a lower temperature. This makes it possible to decrease the energy required to perform the temperature-increasing control when the NOx is reduced.

As a result of conducting studies in view of the above, the inventors have found that when the NOx adsorbent and the NOx reduction catalyst are integrally provided as described above, the noble metal of the NOx reduction catalyst acts on the NOx adsorbent, and the NOx desorption temperature is decreased to a more appropriate temperature.

The zeolite-based NOx adsorbent easily adsorbs HC (hydrocarbon component). Therefore, when the NOx adsorbent adsorbs the HC, NOx adsorption performance may be decreased. To suppress the decrease in the NOx adsorption performance, it is extremely effective to configure the NOx purification device 30 in the mode shown in FIG. 14. In the example shown in FIG. 14, the HC adsorbent layer 40 made of the HC adsorbent is provided on the upper surface of the NOx adsorbent layer 38, and the HC adsorbent has HC adsorption ability higher than that of the NOx adsorbent. It is preferable to use, for example, zeolite (mordenite or the like) that has a pore diameter larger than that of the NOx adsorbent, as the HC adsorbent. With this configuration, because the HC adsorbent layer 40 traps the HC, it is possible to suppress the adsorption of the HC by the NOx adsorbent. Accordingly, it is possible to suppress the decrease in the NOx adsorption performance of the NOx adsorbent. Hereinafter, the second embodiment will be described based on experimental examples.

### Test 3

### Preparation of a specimen α

A base material made of cordierite with a volume of 35 cc (the diameter 30 mm × the length 50 mm) was coated with zeolite that served as the NOx adsorbent. In this case, ZSM-5 subjected to ion exchange with Fe (iron) was used as the zeolite. The base material was coated with the ZSM-5 at a rate of 150 g / L. Hereinafter, the specimen thus produced will be referred to as "specimen α" that is the same as the specimen 1 used in Test 1 described in the first embodiment.

### Preparation of a specimen β

A base material made of cordierite with a volume of 35 cc (the diameter 30 mm × the length 50 mm) was coated with mixture of zeolite (Fe / ZSM-5) and the NOx reduction catalyst. The zeolite (Fe / ZSM-5) was the same as the specimen α, and served as the NOx adsorbent. In the NOx reduction catalyst, Pt (platinum) / Rh (rhodium), which were noble metal components, and Ba (barium) / Li (lithium), which were the NOx storage material components, were supported by Al₂O₃, TiO_{2,} and ZrO₂. Hereinafter, the specimen thus produced will be referred to as "specimen β". The specimen β may be regarded as having the configuration in the mode shown in FIG. 12.

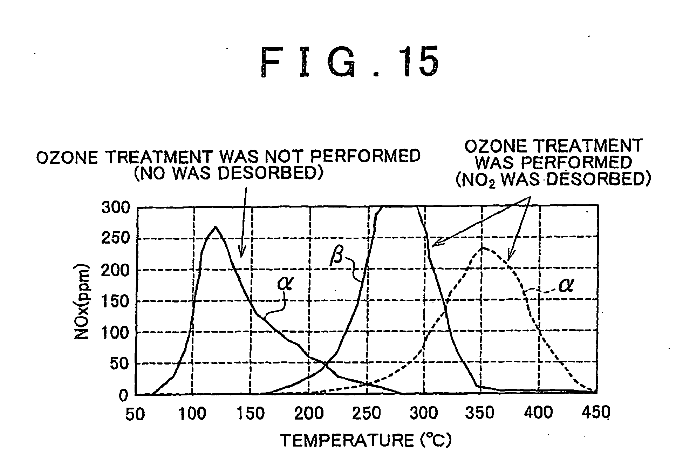

A test, which was the same as Test 1 described in the first embodiment, was conducted using the specimen α and the specimen β. That is, the NO was adsorbed by each of the specimen α and the specimen β at 50 °C, and the adsorbed NO was converted to the nitrate or the nitrate ion using the ozone, and then, the temperature was gradually increased from 50 °C to 500 °C. The concentration of the desorbed NOx was measured. FIG. 15 shows the result of the measurement. FIG. 15 also shows the result of measurement when the specimen α was used and the ozone treatment was not performed.

As shown in FIG. 15, the NOx desorption temperature of the specimen β (when the ozone treatment was performed) was higher than the NOx desorption temperature of the specimen α (when the ozone treatment was not performed). However, the NOx desorption temperature of the specimen β (when the ozone treatment was performed) was lower than the NOx desorption temperature of the specimen α (when the ozone treatment was performed) by approximately 50 °C to 70 °C. That is, (when the ozone treatment was performed), the NOx started to be rapidly desorbed from the specimen β at approximately 250 °C.

In the above-described experimental example, the specimen β, which may be regarded as having the configuration in the mode shown in FIG. 12, was used. However, when using specimens having the configurations in the modes shown in FIG. 13 and FIG. 14, the same advantageous effect is obtained.

As shown in the above-described experimental example, in the exhaust gas control apparatus according to the embodiment, the NOx adsorbent and the NOx reduction catalyst are integrally provided in the NOx purification device 30. Therefore, the NOx (NO₂) adsorbed by the NOx adsorbent is desorbed at a lower temperature (approximately 250 °C) than in the first embodiment. Accordingly, the NOx is reduced by supplying a reducing agent into the NOx purification device 30 at the time point at which the temperature in the NOx purification device 30 has reached to approximately 250 °C. Thus, because the NOx is reduced at a lower temperature than in the first embodiment, it is possible to decrease the energy required to perform the temperature-increasing control, thereby improving fuel efficiency.

### Test 4

### Preparation of a specimen B

A base material made of cordierite with a volume of 3.0 L was coated with mixture of 150 g of zeolite (Ag / ferrierite) that served as the NOx adsorbent, and 400 g of the NOx reduction catalyst. In the NOx reduction catalyst, Pt (platinum) / Rh (rhodium), which were noble metal components, and 13a (barium) / Li (lithium), which were the NOx storage components, were supported by Al₂O₃, TiO₂, and ZrO₂. Hereinafter, the specimen thus produced will be referred to as "specimen B". The specimen B may be regarded as having the configuration in the mode shown in FIG. 12.

### Preparation of a specimen C

A lower layer was formed by coating a base material made of cordierite with a volume of 3.0 L with 400 g of the NOx reduction catalyst. In the NOx reduction catalyst, Pt (platinum) / Rh (rhodium), which were noble metal components, and Ba (barium) / Li (lithium), which were the NOx storage components, were supported by Al₂O₃, TiO₂, and ZrO₂. An upper layer was formed on the lower layer by coating the lower layer with 150 g of zeolite (Ag / ferrierite), which served as the NOx adsorbent. Hereinafter, the specimen thus produced will be referred to as "specimen C". The specimen C may be regarded as having the configuration in the mode shown in FIG. 13.

### Preparation of a specimen D

A lowermost layer was formed by coating a base material made of cordierite with a volume of 3.0 L with 300 g of the NOx reduction catalyst. In the NOx reduction catalyst, Pt (platinum) / Rh (rhodium), which were noble metal components, and Ba (barium) / Li (lithium), which were the NOx storage components, were supported by Al₂O3, TiO₂, and ZrO₂. An intermediate layer was formed on the lowermost layer by coating the lowermost layer with 150 g of zeolite (Ag / ferrierite) with a relatively small pore diameter, which served as the NOx adsorbent. The pore diameter of the zeolite used to form the intermediate layer was 0.45 angstrom. An upper layer was formed on the intermediate layer by coating the intermediate layer with 100 g of zeolite (mordenite) with a relatively large pore diameter, which served as the HC adsorbent. The pore diameter of the zeolite used to form the upper layer was 0.7 angstrom. Hereinafter, the specimen thus produced will be referred to as "specimen D". The specimen D may be regarded as having the configuration in the mode shown in FIG. 14.

The exhaust gas control apparatus with the configuration shown in FIG. 11 and a diesel engine with a displacement of 2.2L were prepared. A test was conducted according to the following steps, using each of the specimens B to D as the NOx purification device 30. Before the test was conducted, the engine was operated on the condition that the temperature of the catalyst was equal to or higher than 600 °C, to purge the NOx in the catalyst.

(1) After the engine was started, the engine was left for approximately 1 hour while the engine was idling at approximately 800 rpm, and the amount of the adsorbed NOx was measured by a continuous analyzer. The NOx purification device 30 was disposed in a place so that the temperature detected by the temperature sensor 20 was approximately 100°C. (2) The ozone was injected by the ozone supply device 18 to convert the adsorbed NO to the nitrate or the nitrate ion. (3) The engine was operated at 1800 rpm / 45 Nm, and combustion rich gas was generated so that the air/fuel ratio was equal to or lower than 14.3, and a rich time was approximately 3 seconds, in order to reduce the adsorbed NOx. At this time, the temperature detected by the temperature sensor 20 was approximately 300 °C. The NOx conversion efficiency was determined by analyzing the exhaust gas downstream of the NOx purification device 30 at this time using the continuous analyzer.

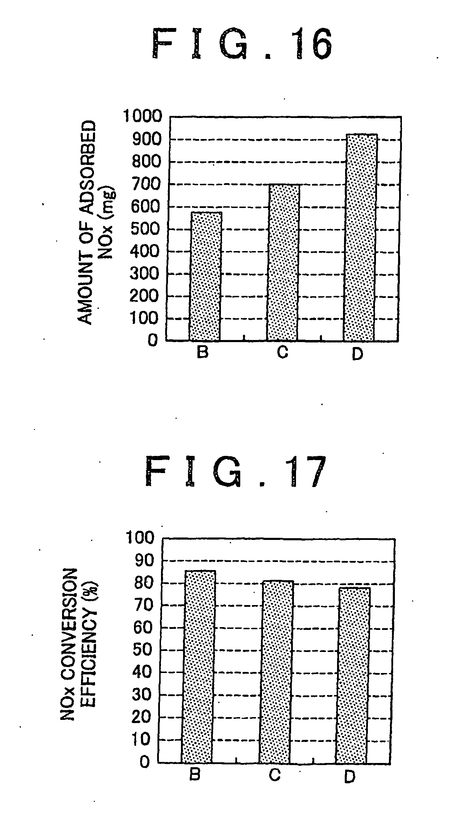

FIG. 16 and FIG. 17 show results of measurement in the above-described test. As shown in FIG. 16, the amount of the NOx adsorbed by the specimen D at low temperatures was the largest among the amounts of the NOx adsorbed by the specimens B to D at low temperatures. As described above, the reason is considered as follows. In the specimen D, because the HC is trapped by the upper layer of the HC adsorbent, the adsorption of the HC by the NOx adsorbent is suppressed. Therefore, the NOx adsorbent provides the higher NOx adsorption performance. As shown in FIG. 17, in all of the cases where the specimens B to D were used, the high NOx conversion efficiency was achieved.

In the above-described embodiments, zeolite was used as the NOx adsorbent. However, the NOx adsorbent in the invention is not limited to zeolite. This point will be described based on experimental examples described below.

### Test 5

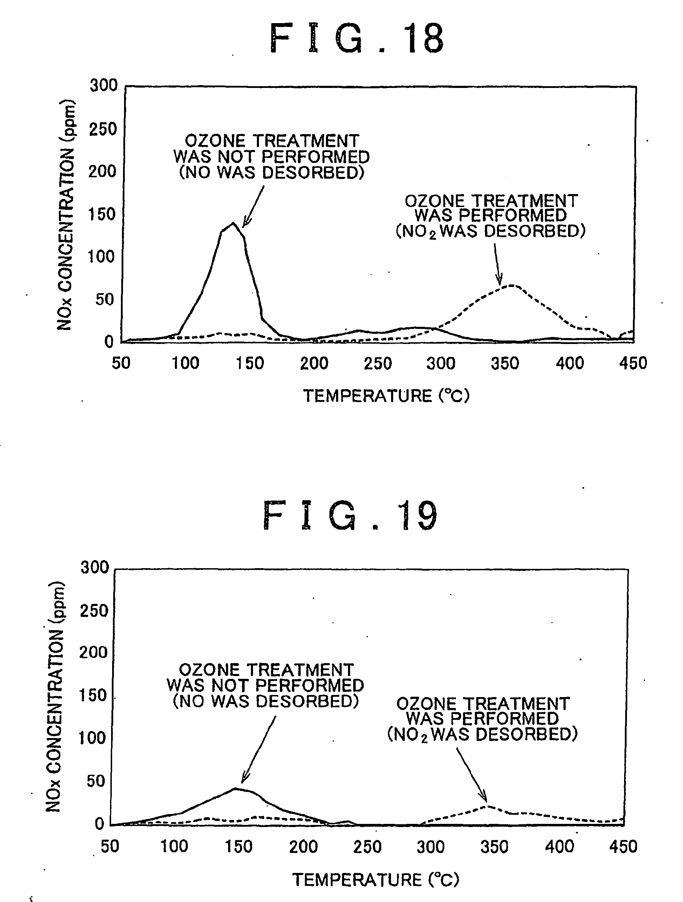

A specimen was produced by coating a base material made of cordierite with a volume of 35 cc (the diameter 30 mm × the length 50 mm) with a material in which 0.2 mol / L of silver nitrate was supported on 150 g / L of alumina. The nitrate ion of the silver nitrate may splash during calcination. Therefore, when the specimen was produced, the silver was supported by the alumina. A test, which was the same as Test 1 in the first embodiment, was conducted using the specimen. That is, the NO was adsorbed at 50 °C, and the adsorbed NO was converted to the nitrate or the nitrate ozone using the ozone. Then, the temperature was gradually increased from 50 °C to 500 °C, and the concentration of the desorbed NOx was measured. Further, when the same specimen was used and the ozone treatment was not performed, the concentration of the desorbed NOx was measured. FIG. 18 shows the results of the measurement.

As shown in FIG. 18, the desorption temperature of the specimen used in Test 5 was also shifted to a higher temperature by converting the adsorbed NO to the nitrate or the nitrate ion using the ozone. Accordingly, the specimen in Test 5 may also be used as the NOx adsorbent in the invention. It is considered that an adsorption phenomenon described below occurs in the specimen. First, the NO is physically adsorbed by the surfaces of the alumina and the silver. Then, when the ozone is supplied, the physically adsorbed NO is converted to the nitrate ion, that is, the physically adsorbed NO is converted to an NO₃⁻ ion, as shown in FIG. 4. Then, during the process of increasing the temperature, the NO₃⁻ ions on the alumina move to the silver. Then, the NO₃⁻ ions react with the silver to produce the silver nitrate. Thus, the adsorption state is stabilized, and accordingly, the desorption temperature shifts to a higher temperature.

### Test 6

A base material made of cordierite with a volume of 35 cc (the diameter 30 mm × the length 50 mm) was coated with 100 g / L of alumina, 100 g / L of a ZrO₂ - TiO₂ solid solution, and 50 g / L of ZrO₂ powder in which 0.5 g / L of Rh was supported. That is, the total amount of the coating was 250 g / L. Further, 2 g / L of Pt, and 0.2 mol / L of Ba were supported, and thus, a specimen was produced. A test, which was the same as Test 1 in the first embodiment, was conducted using the specimen. That is, the NO was adsorbed at 50 °C., and the adsorbed NO was converted to the nitrate or the nitrate ion using the ozone, Then, the temperature was gradually increased from 50 °C to 500 °C, and the concentration of the desorbed NOx was measured. Further, when the same specimen was used and the ozone treatment was not performed, the concentration of the desorbed NOx was measured. FIG. 19 shows the results of the measurement.

As shown in FIG. 19, the desorption temperature of the specimen used in the Test 6 was also shifted to a higher temperature by converting the adsorbed NO to the nitrate or the nitrate ion using the ozone. Accordingly, the specimen in Test 6 may also be used as the NOx adsorbent in the invention. It is considered that an adsorption phenomenon described below occurs in the specimen. First, the NO is physically adsorbed by the surfaces of the alumina, ZrO₂, TiO₂, and Ba. Then, when the ozone is supplied, the physically adsorbed NO is converted to the nitrate ion, that is, the physically adsorbed NO is converted to the NO₃⁻ ion as shown in FIG. 4. Then, during the process of increasing the temperature, the NO₃⁻ ions on the alumina and the like move to Ba. Then, the NO₃⁻ ions react with Ba to produce barium nitrate. Thus, the adsorption state is stabilized, and accordingly, the desorption temperature shifts to a higher temperature.

## Claims

1. An exhaust gas control apparatus for an internal combustion engine, comprising:
a NOx adsorbent (14) that is provided in an exhaust passage (12) of an internal combustion engine, and that adsorbs nitrogen monoxide;
an active oxygen supply device (18) that supplies active oxygen to an area upstream of the NOx adsorbent; **characterised in that** the apparatus further comprises
a control portion that performs a first control that does not cause the active oxygen supply device to supply the active oxygen while exhaust gas flows to the NOx adsorbent at a time of cold start of the internal combustion engine, whereby the nitrogen monoxide is adsorbed by the NOx adsorbent, wherein the control, portion performs a second control that causes the active oxygen supply device to supply the active oxygen after the first control is finished, whereby the nitrogen monoxide adsorbed by the NOx adsorbent is converted to a nitrate or a nitrate ion on the NOx adsorbent.

2. The exhaust gas control apparatus according to claim 1, wherein
the first control is finished when an elapsed time after the start of the engine reaches a predetermined time.

3. The exhaust gas control apparatus according to claim 1, wherein
the first control is finished when a temperature of the NOx adsorbent reaches a predetermined temperature.

4. The exhaust gas control apparatus according to claim 3, wherein
the predetermined temperature is equal to or lower than 100 °C.

5. The exhaust gas control apparatus according to claim 1, wherein
the control portion calculates an amount of the nitrogen monoxide adsorbed by the NOx adsorbent while performing the first control, and performs the second control when the calculated amount of the nitrogen monoxide is equal to or larger than a predetermined amount.

6. The exhaust gas control apparatus according to claim 1, wherein
the control portion starts the second control before a temperature of the NOx adsorbent reaches a desorption temperature at which the nitrogen monoxide adsorbed by the NOx adsorbent is desorbed from the NOx adsorbent.

7. The exhaust gas control apparatus according to any one of claims 1 to 4 and 6,
wherein
the control portion calculates an amount of the nitrogen monoxide adsorbed by the NOx adsorbent while performing the first control; and
the control portion controls an amount of the supplied active oxygen during the second control, based on the calculated amount of the nitrogen monoxide.

8. The exhaust gas control apparatus according to any one of claims 1 to 7,
wherein
when the NOx adsorbent adsorbs NOx, a main component of the NOx is the nitrogen monoxide.

9. The exhaust gas control apparatus according to any one of claims 1 to 8,
wherein
when NOx is desorbed from the NOx adsorbent, a main component of the NOx is nitrogen dioxide.

10. The exhaust gas control apparatus according to any one of claims 1 to 9, further comprising
a NOx reduction catalyst (16) that reduces NOx desorbed from the NOx adsorbent.

11. The exhaust gas control apparatus according to claim 10, further comprising
a temperature-increasing portion that performs a temperature-increasing control to increase a temperature of the NOx reduction catalyst after the second control is started.

12. The exhaust gas control apparatus according to claim 10 or 11, wherein the NOx reduction catalyst is disposed downstream of the NOx adsorbent.

13. The exhaust gas control apparatus according to claim 10 or 11, wherein
the NOx reduction catalyst is provided integrally with the NOx adsorbent.

14. The exhaust gas control apparatus according to claim 13, wherein
the NOx reduction catalyst and the NOx adsorbent are provided in a manner such that the NOx reduction catalyst is mixed with the NOx adsorbent.

15. The exhaust gas control apparatus according to claim 13, wherein
a NOx reduction catalyst layer, which is a layer of the NOx reduction catalyst, and a NOx adsorbent layer, which is a layer of the NOx adsorbent, are stacked.

16. The exhaust gas control apparatus according to claim 15, wherein
the NOx adsorbent layer (38) is provided on an upper surface of the NOx reduction catalyst layer (36).

17. The exhaust gas control apparatus according to claim 16, further comprising
an HC adsorbent layer (40) is provided on an upper surface of the NOx adsorbent layer, and the HC adsorbent layer has HC adsorption ability higher than that of the NOx adsorbent layer.

18. The exhaust gas control apparatus according to claim 1, wherein
the NOX adsorbent is made of zeolite.

19. The exhaust gas control apparatus according to claim 18, wherein
the control portion starts the second control before a temperature of the zeolite reaches 70 °C.

20. A method of controlling an exhaust gas control apparatus for an internal combustion engine, which includes a NOx adsorbent that is provided in an exhaust passage of an internal combustion engine, and that adsorbs nitrogen monoxide; and an active oxygen supply device that supplies active oxygen to an area upstream of the NOx adsorbent, the method comprising:
performing a first control that does not cause the active oxygen supply device to supply the active oxygen while exhaust gas flows to the NOx adsorbent at a time off cold start of the internal combustion engine, whereby the nitrogen monoxide is adsorbed by the NOx adsorbent; and
performing a second control that causes the active oxygen supply device to supply the active oxygen after the first control is finished, whereby the nitrogen monoxide adsorbed by the NOx adsorbent is converted to a nitrate or a nitrate ion on the NOx adsorbent.

## Patentansprüche

1. Abgassteuervorrichtung für eine Brennkraftmaschine, welche aufweist:
ein NOx-Adsorptionsmittel (14), das in einer Abgasleitung (12) einer Brennkraftmaschine vorgesehen ist und Stickstoffmonoxid adsorbiert; und
eine Aktivsauerstoffzuführvorrichtung (18), die einem Bereich stromaufwärts des NOx-Adsorptionsmittels aktiven Sauerstoff zuführt,
**dadurch gekennzeichnet, dass**
die Vorrichtung ferner einen Steuerabschnitt aufweist, der eine erste Steuerung durchführt, welche die Aktivsauerstoffzuführvorrichtung keinen aktiven Sauerstoff zuführen lässt, während Abgas zum Zeitpunkt eines Kaltstarts der Brennkraftmaschine zu dem NOx-Adsorptionsmittel strömt, wodurch das Stickstoffmonoxid durch das NOx-Adsorptionsmittel adsorbiert wird, wobei der Steuerabschnitt eine zweite Steuerung durchführt, welche die Aktivsauerstoffzuführvorrichtung den aktiven Sauerstoff nach Beendigung der ersten Steuerung zuführen lässt, wodurch das durch NOx-Adsorptionsmittel adsorbierte Stickstoffmonoxid in ein Nitrat oder Nitrat-Ion an dem NOx-Adsorptionsmittel umgewandelt wird.

2. Abgassteuervorrichtung gemäß Anspruch 1, wobei die erste Steuerung beendet wird, wenn eine seit dem Start der Maschine verstrichene Zeitdauer eine vorbestimmte Zeitdauer erreicht.

3. Abgassteuervorrichtung gemäß Anspruch 1, wobei die erste Steuerung beendet wird, wenn eine Temperatur des NOx-Adsorptionsmittels eine vorbestimmte Temperatur erreicht.

4. Abgassteuervorrichtung gemäß Anspruch 3, wobei die vorbestimmte Temperatur gleich oder kleiner als 100°C ist.

5. Abgassteuervorrichtung gemäß Anspruch 1, wobei der Steuerabschnitt während der Durchführung der ersten Steuerung eine Stickstoffmonoxidmenge, die durch das NOx-Adsorptionsmittel adsorbiert wird, berechnet und die zweite Steuerung durchführt, wenn die berechnete Stickstoffmonoxidmenge gleich oder größer als eine vorbestimmte Menge ist.

6. Abgassteuervorrichtung gemäß Anspruch 1, wobei der Steuerabschnitt die zweite Steuerung beginnt, bevor eine Temperatur des NOx-Adsorptionsmittels eine Desorptionstemperatur erreicht, bei der das durch das NOx-Adsorptionsmittel adsorbierte Stickstoffmonoxid von dem NOx-Adsorptionsmittel desorbiert wird.

7. Abgassteuervorrichtung gemäß einem der Ansprüche 1 bis 4 und 6, wobei der Steuerabschnitt während der Durchführung der ersten Steuerung eine durch das NOx-Adsorptionsmittel adsorbierte Stickstoffmonoxidmenge berechnet; und
der Steuerabschnitt auf der Grundlage der berechneten Stickstoffmonoxidmenge eine Menge an aktivem Sauerstoff steuert, die während der zweiten Steuerung zugeführt wird.

8. Abgassteuervorrichtung gemäß einem der Ansprüche 1 bis 7, wobei, wenn das NOx-Adsorptionsmittel NOx adsorbiert, das Stickmonoxid ein Hauptbestandteil des NOx ist.

9. Abgassteuervorrichtung gemäß einem der Ansprüche 1 bis 8, wobei, wenn NOx von dem NOx-Adsorptionsmittel desorbiert wird, Stickstoffdioxid ein Hauptbestandteil des NOx ist.

10. Abgassteuervorrichtung gemäß einem der Ansprüche 1 bis 9, welche ferner einen NOx-Reduktionskatalysator (16) aufweist, der von dem NOx-Adsorptionsmittel desorbiertes NOx reduziert.

11. Abgassteuervorrichtung gemäß Anspruch 10, welche ferner einen Temperaturerhöhungsabschnitt aufweist, der eine Temperaturerhöhungssteuerung durchführt, um nach dem Start der zweiten Steuerung eine Temperatur des NOx-Reduktionskatalysators zu erhöhen.

12. Abgassteuervorrichtung gemäß Anspruch 10 oder 11, wobei der NOx-Reduktionskatalysator stromabwärts des NOx-Adsorptionsmittels angeordnet ist.

13. Abgassteuervorrichtung gemäß Anspruch 10 oder 11, wobei der NOx-Reduktionskatalysator mit dem NOx-Adsorptionsmittel einstückig vorgesehen ist.

14. Abgassteuervorrichtung gemäß Anspruch 13, wobei der NOx-Reduktionskatalysator und das NOx-Adsorptionsmittel auf eine solche Weise vorgesehen sind, dass der NOx-Reduktionskatalysator mit dem NOx-Adsorptionsmittel vermischt ist.

15. Abgassteuervorrichtung gemäß Anspruch 13, wobei eine NOx-Reduktionskatalysatorschicht, die eine Schicht des NOx-Reduktionskatalysators ist, und eine NOx-Adsorptionsmittelschicht, welche eine Schicht des NOx-Adsorptionsmittel ist, gestapelt sind.

16. Abgassteuervorrichtung gemäß Anspruch 15, wobei die NOx-Adsorptionsmittelschicht (38) auf einer oberen Fläche der NOx-Reduktionskatalysatorschicht (36) vorgesehen ist.

17. Abgassteuervorrichtung gemäß Anspruch 16, welche ferner eine HC-Adsorptionsmittelschicht (40) aufweist, die an einer oberen Fläche der NOx-Adsorptionsmittelschicht vorgesehen ist und eine höhere HC-Adsorptionsfähigkeit als die NOx-Adsorptionsmittelschicht hat.

18. Abgassteuervorrichtung gemäß Anspruch 1, wobei das NOx-Adsorptionsmittel aus Zeolith hergestellt ist.

19. Abgassteuervorrichtung gemäß Anspruch 1, wobei
der Steuerabschnitt die zweite Steuerung startet, bevor die Temperatur des Zeolith 70°C erreicht.

20. Verfahren zum Steuern einer Abgassteuervorrichtung für eine Brennkraftmaschine, die ein NOx-Adsorptionsmittel, das in einer Abgasleitung der Brennkraftmaschine vorgesehen ist und Stickstoffmonoxid adsorbiert, und eine Aktivsauerstoffzuführvorrichtung, die aktiven Sauerstoff zu einem Bereich stromaufwärts des NOx-Adsorptionsmittels zuführt, aufweist, wobei das Verfahren die Schritte aufweist:
Durchführen einer ersten Steuerung, welche die Aktivsauerstoffzuführvorrichtung keinen aktiven Sauerstoff zuführen lässt, während Abgas zum Zeitpunkt eines Kaltstarts der Brennkraftmaschine zu dem NOx-Adsorptionsmittel strömt, wodurch das Stickstoffmonoxid durch das NOx-Adsorptionsmittel adsorbiert wird; und
Durchführen einer zweiten Steuerung, welche die Aktivsauerstoffzuführvorrichtung nach Beendigung der ersten Steuerung aktiven Sauerstoff zuführen lässt, wodurch das durch das NOx-Adsorptionsmittel adsorbierte Stickstoffmonoxid in ein Nitrat oder ein Nitrat-Ion an dem NOx-Adsorptionsmittel umgewandelt wird.

## Revendications

1. Appareil de commande de gaz d'échappement pour moteur à combustion interne, comprenant :
un adsorbant de NOx (14) qui est disposé dans un passage d'échappement (12) d'un moteur à combustion interne, et qui adsorbe le monoxyde d'azote ;
un dispositif d'apport d'oxygène actif (18) qui apporte de l'oxygène actif à une zone en amont de l'adsorbant de NOx ; **caractérisé en ce que** l'appareil comprend en outre
une partie de commande qui réalise une première commande qui n'amène pas le dispositif d'apport d'oxygène actif à apporter l'oxygène actif tandis que les gaz d'échappement circulent jusqu'à l'adsorbant de NOx à un moment de démarrage à froid du moteur à combustion interne, de sorte que le monoxyde d'azote est adsorbé par l'adsorbant de NOx, où la partie de commande réalise une seconde commande qui amène le dispositif d'apport d'oxygène actif à apporter l'oxygène actif après la fin de la première commande, de sorte que le monoxyde d'azote adsorbé par l'adsorbant de NOx est converti en un nitrate ou un ion nitrate sur l'adsorbant de NOx.

2. Appareil de commande de gaz d'échappement selon la revendication 1, où
la première commande est terminée quand une durée écoulée après le démarrage du moteur atteint une durée prédéterminée.

3. Appareil de commande de gaz d'échappement selon la revendication 1, où
la première commande est terminée quand une température de l'adsorbant de NOx atteint une température prédéterminée.

4. Appareil de commande de gaz d'échappement selon la revendication 3, où
la température prédéterminée est égale ou inférieure à 100°C.

5. Appareil de commande de gaz d'échappement selon la revendication 1, où
la partie de commande calcule une quantité du monoxyde d'azote adsorbée par l'adsorbant de NOx tout en réalisant la première commande, et réalise la seconde commande quand la quantité calculée du monoxyde d'azote est égale ou supérieure à une quantité prédéterminée.

6. Appareil de commande de gaz d'échappement selon la revendication 1, où
la partie de commande commence la seconde commande avant qu'une température de l'adsorbant de NOx atteigne une température de désorption à laquelle le monoxyde d'azote adsorbé par l'adsorbant de NOx est désorbé de l'adsorbant de NOx.

7. Appareil de commande de gaz d'échappement selon l'une quelconque des revendications 1 à 4 et 6, où
la partie de commande calcule une quantité du monoxyde d'azote adsorbée par l'adsorbant de NOx tout en réalisant la première commande ; et
la partie de commande commande une quantité de l'oxygène actif apporté pendant la seconde commande, sur la base de la quantité calculée du monoxyde d'azote.

8. Appareil de commande de gaz d'échappement selon l'une quelconque des revendications 1 à 7, où
quand l'adsorbant de NOx adsorbe NOx, un composant principal du NOx est le monoxyde d'azote.

9. Appareil de commande de gaz d'échappement selon l'une quelconque des revendications 1 à 8, où
quand NOx est désorbé de l'adsorbant de NOx, un composant principal du NOx est le dioxyde d'azote.

10. Appareil de commande de gaz d'échappement selon l'une quelconque des revendications 1 à 9, comprenant en outre
un catalyseur de réduction de NOx (16) qui réduit NOx désorbé de l'adsorbant de NOx.

11. Appareil de commande de gaz d'échappement selon la revendication 10, comprenant en outre
une partie augmentant la température qui réalise une commande d'augmentation de la température pour augmenter une température du catalyseur de réduction de NOx après le début de la seconde commande.

12. Appareil de commande de gaz d'échappement selon la revendication 10 ou 11, où
le catalyseur de réduction de NOx est disposé en aval de l'adsorbant de NOx.

13. Appareil de commande de gaz d'échappement selon la revendication 10 ou 11, où
le catalyseur de réduction de NOx est disposé intégralement avec l'adsorbant de NOx.

14. Appareil de commande de gaz d'échappement selon la revendication 13, où
le catalyseur de réduction de NOx et l'adsorbant de NOx sont disposés d'une manière telle que le catalyseur de réduction de NOx est mélangé avec l'adsorbant de NOx.

15. Appareil de commande de gaz d'échappement selon la revendication 13, où
une couche de catalyseur de réduction de NOx, qui est une couche du catalyseur de réduction de NOx, et une couche d'adsorbant de NOx, qui est une couche de l'adsorbant de NOx, sont empilées.

16. Appareil de commande de gaz d'échappement selon la revendication 15, où
la couche d'adsorbant de NOx (38) est disposée sur une surface supérieure de la couche de catalyseur de réduction de NOx (36).

17. Appareil de commande de gaz d'échappement selon la revendication 16, comprenant en outre
une couche d'adsorbant de HC (40) est disposée sur une surface supérieure de la couche d'adsorbant de NOx, et la couche d'adsorbant de HC a une capacité d'adsorption de HC supérieure à celle de la couche d'adsorbant de NOx.

18. Appareil de commande de gaz d'échappement selon la revendication 1, où
l'adsorbant de NOx est fait de zéolite.

19. Appareil de commande de gaz d'échappement selon la revendication 18, où
la partie de commande commence la seconde commande avant qu'une température de la zéolite atteigne 70°C.

20. Procédé de commande d'un appareil de commande de gaz d'échappement pour moteur à combustion interne, qui inclut un adsorbant de NOx qui est disposé dans un passage d'échappement d'un moteur à combustion interne, et qui adsorbe le monoxyde d'azote ; et un dispositif d'apport d'oxygène actif qui apporte de l'oxygène actif à une zone en amont de l'adsorbant de NOx, le procédé comprenant :
la réalisation d'une première commande qui n'amène pas le dispositif d'apport d'oxygène actif à apporter l'oxygène actif tandis que les gaz d'échappement circulent jusqu'à l'adsorbant de NOx à un moment de démarrage à froid du moteur à combustion interne, de sorte que le monoxyde d'azote est adsorbé par l'adsorbant de NOx ; et
la réalisation d'une seconde commande qui amène le dispositif d'apport d'oxygène actif à apporter l'oxygène actif après la fin de la première commande, de sorte que le monoxyde d'azote adsorbé par l'adsorbant de NOx est converti en un nitrate ou un ion nitrate sur l'adsorbant de NOx.
